# EUROPEAN PATENT APPLICATION

(11) **EP 4 807 806 A1**
(43) Date of publication of application: **16.09.2026**
(21) Application number: 24899247.1
(22) Date of filing: 11.07.2024
(51) Int. Cl.: H01M 4/36, H01M 4/587, H01M 10/0525

(54) **SECONDARY BATTERY AND ELECTRICAL APPARATUS**

(30) Priority: 07.12.2023 CN 202311675944
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN)
(74) Representative: Lorenz Seidler Gossel Part. mbB
(86) International application number: PCT/CN2024/104988
(87) International publication number: WO 2025/118596

(57) **Abstract**

The present disclosure provides a secondary battery and an electrical apparatus. The secondary battery comprises a negative electrode sheet; the negative electrode sheet comprises a negative electrode current collector and a negative electrode film layer formed on at least one surface of the negative electrode current collector; the negative electrode film layer comprises a graphite material, and the tap density of the graphite material is 1.2 g/cm³-1.4 g/cm³; the difference value between the compaction density of the negative electrode film layer and the tap density of the graphite material is not less than 0.15 g/cm³.

## Description

### CROSS-REFERENCE TO RELATED APPLICATIONS

The present disclosure references Chinese Patent Application No. 202311675944.4, filed on December 7, 2023 and entitled "SECONDARY BATTERY AND POWER CONSUMING APPARATUS", which is incorporated herein by reference in its entirety.

### TECHNICAL FIELD

The present disclosure relates to the field of battery technologies, and in particular, to a secondary battery and a power consuming apparatus.

### BACKGROUND

In recent years, secondary batteries have been widely used in energy storage power systems such as hydraulic, thermal, wind, and solar power stations, as well as in various fields such as power tools, electric bicycles, electric motorcycles, electric vehicles, military equipment, and aerospace.

With the increasing demand for longer endurance of a power consuming apparatus, there are more stringent requirements for the cycle life of secondary batteries. How to further prolong the cycle life of secondary batteries is a technical problem urgently needing to be resolved by a person skilled in the art.

### SUMMARY

The present disclosure aims to provide a secondary battery and a power consuming apparatus, to improve the cycle life of the secondary battery.

According to a first aspect of the present disclosure, a secondary battery is provided, including a negative electrode plate. The negative electrode plate includes a negative electrode current collector and a negative electrode film layer formed on at least one surface of the negative electrode current collector. The negative electrode film layer includes a graphite material. The graphite material has a tap density of 1.2 g/cm³ to 1.4 g/cm³. In addition, a difference between a compaction density of the negative electrode film layer and the tap density of the graphite material is greater than or equal to 0.15 g/cm³.

The applicants have found that the severe black spots are formed for a high-tap-density graphite material in a low-compaction-density electrode plate due to the tendency of the high-tap-density graphite material to be closely packed. Under a low cold-pressing pressure, the electrode plate can achieve a desired low compaction density. However, the low cold-pressing pressure results in excessively large pores and poor contact between the graphite materials during compaction of the electrode plate. During formation, an electrochemical reaction between the graphite material and an electrolyte solution is delayed, preventing timely discharge of gas generated in the negative electrode film layer, inhibiting further lithium intercalation of the graphite material in this region, and forming severe black spots on a surface of a negative electrode after full charging. The electrode plate exhibits uneven local lithium-ion concentration distribution after high-temperature storage or a plurality of charge and discharge cycles, resulting in lithium plating, capacity fading, and significant deterioration in capacity retention. Embodiments of the present disclosure overcome the biases in the related art by combining a high-compaction-density negative electrode film layer with the high-tap-density graphite material. The secondary battery can fully leverage a good cycle performance of the high-tap-density graphite material while reducing the likelihood of severe black spots formed on the negative electrode after full charging of the battery, thereby reducing the likelihood of sudden performance degradation after long-term cycling or high-temperature storage of the battery, and improving the cycle stability and high-temperature storage stability of the battery.

In any embodiment of the present disclosure, a compaction density of the negative electrode film layer is less than or equal to 1.55 g/cm³ and is greater than or equal to 1.40 g/cm³.

The compaction density of the electrode plate film layer within an appropriate range can not only reduce the likelihood of severe black spots formed on the electrode plate after full charging of the battery, but also improve the integrity of graphite material particles during cold pressing, thereby maintaining an internal pore structure of the electrode plate and a lower tortuosity of the electrode plate, and balancing long-term cycle stability and high kinetic performance of the secondary battery.

In any embodiment of the present disclosure, the graphite material includes primary particles. In some embodiments, a quantity proportion of the primary particles in the graphite material is greater than or equal to 85% based on a total quantity of particles in the graphite material. In some exemplary embodiments, the quantity proportion of the primary particles in the graphite material is 85% to 100% based on the total quantity of particles in the graphite material.

Compared to secondary particles, the primary particles may effectively reduce grain boundary content, reduce the likelihood of side reactions between the graphite material and the electrolyte solution, and improve the uniformity of the electrode plate. A high content proportion of primary particles improves the cycle stability of the secondary battery.

In any embodiment of the present disclosure, Dv1 of the graphite material is 1.5 µm to 3.0 µm. In some embodiments, the Dv1 of the graphite material is 1.6 µm to 2.8 µm.

The applicants have found that the particle size Dv1 of the graphite material significantly affects an electrochemical performance of the secondary battery. The Dv1 of the graphite material within an appropriate range ensures a particular proportion of fine powder, namely a small-particle-size graphite material, in the negative electrode film layer, which enhances electrical contact of the negative electrode film layer and improves kinetic performance, thereby advancing formation gas generation SOC, and reducing the likelihood of severe black spots formed during battery production and the likelihood of sudden degradation in electrochemical performance during cycling or storage of the battery. In addition, the likelihood of a small-particle-size graphite material clogging the pores of the negative electrode film layer can be reduced, maintaining normal electrode plate pores facilitates high wettability of the electrolyte solution, the risk of lithium plating on the negative electrode is reduced, and the cycle stability and high-temperature storage stability of the battery are improved.

In any embodiment of the present disclosure, Dv50 of the graphite material is 12 µm to 16 µm. In some embodiments, the Dv50 of the graphite material is 13 µm to 15 µm.

The graphite material has a large volume distribution particle size Dv50, which facilitates the formation of appropriate pore channel structures between particles in the negative electrode film layer, promotes thorough infiltration of the electrolyte solution into the negative electrode plate, reduces the likelihood of local polarization, and mitigates the impact of black spots on the cycle life and storage stability of the battery.

In any embodiment of the present disclosure, a particle size distribution (Dv90-Dv10)/Dv50 of the graphite material is 1.2 to 1.7. In some embodiments, the particle size distribution (Dv90-Dv10)/Dv50 of the graphite material is 1.35 to 1.60.

The graphite material with a particle size distribution within the foregoing range can reduce the uneven distribution of active ions caused by a large difference in particle size in the graphite material, reduce side reactions between the small-particle-size graphite material and the electrolyte solution, and improve the cycle performance and storage stability of the secondary battery.

In any embodiment of the present disclosure, a specific surface area of the graphite material is 0.6 m²/g to 1.5 m²/g. In some embodiments, the specific surface area of the graphite material is 0.9 m²/g to 1.4 m²/g.

The graphite material with a small specific surface area can reduce the likelihood of side reactions between the graphite material and the electrolyte solution, and enhance the cycle performance and storage stability of the battery.

In any embodiment of the present disclosure, an oil absorption of the graphite material is not more than 45 ml/100 g. In some embodiments, the oil absorption of the graphite material is 30 ml/100 g to 45 ml/100 g.

The oil absorption of the graphite material can, to some extent, reflect the dispersibility of the graphite material in a negative electrode slurry. A high oil absorption of the graphite material means that the graphite material requires more dispersant (e.g., sodium carboxymethyl cellulose) for wetting during dispersion, and slurry sedimentation is more likely to be caused, resulting in unstable quality during the coating of the electrode plate and uneven thickness of the cold-pressed electrode plate. The graphite material with the oil absorption within the foregoing range not only exhibits good wettability to the electrolyte solution, contributing to good kinetic performance and cycle stability of the secondary battery, but also maintains excellent particle dispersion during stirring, reducing the likelihood of slurry sedimentation caused by excessive adsorption of the dispersant by the graphite material, thereby enabling a wider processing window for coating of the electrode plate and improved uniformity of the electrode plate.

In any embodiment of the present disclosure, a graphitization degree of the graphite material is 88% to 93%. In some embodiments, the graphitization degree of the graphite material is 89% to 92%.

Controlling the graphitization degree within the foregoing range allows for a balance between achieving high capacity of the graphite material and minimizing volume change of a graphite active material during charging, thereby contributing to improvement of the cycle stability.

In any embodiment of the present disclosure, an areal density of the negative electrode film layer is 7 mg/cm² to 14 mg/cm². In some embodiments, the areal density of the negative electrode film layer is 9 mg/cm² to 12 mg/cm².

In any embodiment of the present disclosure, the graphite material includes artificial graphite.

According to a second aspect of the present disclosure, a power consuming apparatus is provided, including a secondary battery according to the first aspect of the present disclosure.

### BRIEF DESCRIPTION OF THE DRAWINGS

To describe technical solutions in embodiments of the present disclosure more clearly, the following briefly describes the accompanying drawings required for describing the embodiments of the present disclosure. Obviously, the accompanying drawings described below are merely some embodiments of the present disclosure. A person skilled in the art may further derive other accompanying drawings from such accompanying drawings without making any creative efforts.
FIG. 1 is a schematic diagram of an embodiment of a secondary battery according to the present disclosure;
FIG. 2 is a schematic exploded view of an embodiment of a secondary battery according to the present disclosure;
FIG. 3 is a schematic diagram of an embodiment of a battery module according to the present disclosure;
FIG. 4 is a schematic diagram of an embodiment of a battery pack according to the present disclosure;
FIG. 5 is a schematic exploded view of the embodiment of the battery pack shown in FIG. 4; and
FIG. 6 is a schematic diagram of an embodiment of a power consuming apparatus including a secondary battery of the present disclosure as a power supply.

In the accompanying drawings, the accompanying drawings are not drawn to actual scale. Reference Numerals: 1, battery pack; 2, upper box; 3, lower box; 4, battery module; 5, secondary battery; 51, case; 52, electrode assembly; 53, cover plate.

### DETAILED DESCRIPTION

Embodiments of a secondary battery and a power consuming apparatus of the present disclosure will be specifically disclosed in detail below as appropriate with reference to the accompanying drawings. However, there may be cases where unnecessary detailed illustrations are omitted. For example, there are cases where detailed explanations of well-known matters and repeated explanations of actually the same structure are omitted. Thus, the following illustrations do not become unnecessarily lengthy, which facilitates understanding by a person skilled in the art. In addition, the drawings and subsequent descriptions are provided for a person skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or exclude end values, and may be arbitrarily combined. To be specific, any lower limit may be combined with any upper limit to form a new range. For example, if ranges of 60 to 120 and 80 to 110 are listed for a particular parameter, it is to be understood that ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present disclosure, unless otherwise specified, the numerical value range "a-b" represents an abbreviated representation of any combination of real numbers between a and b, where a and b are both real numbers. For example, the numerical range "0 to 5" represents that all real numbers between 0 and 5 are listed herein, and "0 to 5" is merely the abbreviated representation of the combination of these numbers. In addition, when a parameter is expressed as an integer greater than or equal to 2, it is equivalent to disclosing that the parameter is an integer such as 2, 3, 4, 5, 6, 7, 8, 9, 10, 11, 12, or the like.

Unless otherwise specified, all the embodiments and optional embodiments of the present disclosure may be combined with each other to form new technical solutions, and such technical solutions should be considered to be included in the disclosure of the present disclosure.

Unless otherwise specified, all the technical features and optional technical features of the present disclosure may be combined with each other to form new technical solutions, and such technical solutions should be considered to be included in the disclosure of the present disclosure.

Unless otherwise specified, all the steps in the present disclosure may be carried out, either in order or randomly, preferably in order. For example, that "the method includes step (a) and step (b)" indicates that the method may include step (a) and step (b) performed sequentially, or the method may include step (b) and step (a) performed sequentially. For example, the reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specified, the terms such as "include", "comprise", and their variants mentioned in the present application may be open-ended or closed-ended. For example, "include" and "comprise" may indicate that it is possible to include or comprise other components not listed, and it is also possible to include or comprise the listed components exclusively.

Unless otherwise specified, the term "or" is inclusive in the present application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present). Alternatively, both A and B are true (or present).

Unless otherwise stated, the terms used in the present disclosure have well-known meanings as commonly understood by a person skilled in the art.

Unless otherwise stated, the values of the parameters mentioned in the present disclosure may be measured by various test methods commonly used in the art, for example, may be measured according to the test methods given in the present disclosure.

Unless otherwise specified, the term "active ion" in the present disclosure refers to ions capable of reversibly intercalating into and deintercalating from positive and negative electrodes of a secondary battery, including but not limited to lithium ions.

In the present disclosure, the term "multiple" or "a plurality of" indicates two or more.

With the continuous development of the new energy industry, a lithium battery energy storage system has attracted increasing attention. The lithium battery energy storage system is an apparatus that utilizes lithium batteries to store energy, may store energy generated from renewable energy sources such as solar photovoltaic energy and wind energy, and may further serve as auxiliary facilities for the power grid. Compared to power batteries, energy storage batteries place greater emphasis on cycle life. To achieve a long cycle life of a battery, researchers often select a high-tap-density negative electrode material combined with a low-compaction-density electrode plate film layer. This is because the high-tap-density negative electrode material undergoes a lower pressure during cold pressing of the electrode plate, which helps maintain particle integrity and low internal stress of particles, thereby reducing the likelihood of side reactions while maintaining a long-term pore structure in the electrode plate, ensuring unobstructed lithium intercalation paths, minimizing polarization, providing kinetic performance of the battery in a long-cycle period, and improving the cycle life of the battery. However, the applicants have found during research and development that the negative electrode plate is prone to forming black spots on the surface of the negative electrode after full charging, adversely affecting the appearance and quality of the electrode plate. Moreover, the electrode plate with severe black spots leads to uneven local lithium-ion concentration after a plurality of charge and discharge cycles, resulting in lithium plating and sudden capacity fading, and ultimately failing to meet the requirements for the use and storage of long-cycle-life batteries.

Based on this, the present disclosure provides a secondary battery, including a negative electrode plate. The negative electrode plate includes a negative electrode current collector and a negative electrode film layer formed on at least one surface of the negative electrode current collector. The negative electrode film layer includes a graphite material. The graphite material has a tap density of 1.2 g/cm³ to 1.4 g/cm³. In addition, a difference between a compaction density of the negative electrode film layer and the tap density of the graphite material is greater than or equal to 0.15 g/cm³.

In this specification, the term "tap density" refers to the mass per unit volume of a powder measured in a container under specified conditions after being subjected to tapping.

In the present disclosure, the tap density of the graphite material may be tested by using a method known in the art. As an example, with reference to GB/T 5162-2006, a powder tap density tester may be used for testing. The tester may be a Dandong Bettersize BT-301, having the following test parameters: vibration frequency: 250±15 taps/minute, amplitude: 3±0.2 mm, number of vibrations: 5000 taps, and measuring cylinder: 25 mL.

In some embodiments, the tap density of the graphite material is 1.2g/cm3, 1.25g/cm³, 1.3g/cm³, 1.35g/cm³, 1.4g/cm³, or any value in between.

In the present disclosure, the compaction density of the negative electrode film layer may be tested by using a method known in the art. As an example, a negative electrode plate test sample with an area of S is weighed by using an electronic balance, and the weight is recorded as W1. A thickness of the negative electrode plate is measured by using a micrometer and recorded as T1. A film layer of the weighed electrode plate is then wiped off. The weight of a negative electrode current collector is calculated and recorded as W2. A thickness of the negative electrode current collector is measured by using the micrometer and recorded as T2. A compaction density (PD) of the negative electrode film layer is calculated as follows: PD=(W1-W2)/[(T1-T2)×S].

In some embodiments, the difference between the compaction density of the negative electrode film layer and the tap density of the graphite material is 0.15 g/cm³, 0.16 g/cm³, 0.17 g/cm³, 0.18 g/cm³, 0.19 g/cm³, 0.2 g/cm³, 0.21 g/cm³, 0.22 g/cm³, 0.23 g/cm³, 0.24 g/cm³, 0.25 g/cm³, or any value in between.

The applicants have found that the severe black spots are formed for a high-tap-density graphite material in a low-compaction-density electrode plate due to the tendency of the high-tap-density graphite material to be closely packed. Under a low cold-pressing pressure, the electrode plate can achieve a desired low compaction density. However, the low cold-pressing pressure results in excessively large pores and poor contact between the graphite materials during compaction of the electrode plate. During formation, an electrochemical reaction between the graphite material and an electrolyte solution is delayed, preventing timely discharge of gas generated in the negative electrode film layer, inhibiting further lithium intercalation of the graphite material in this region, and forming severe black spots on a surface of a negative electrode after full charging. The electrode plate exhibits uneven local lithium-ion concentration distribution after high-temperature storage or a plurality of charge and discharge cycles, resulting in lithium plating, capacity fading, and significant deterioration in capacity retention. Embodiments of the present disclosure overcome the biases in the related art by combining a high-compaction-density negative electrode film layer with the high-tap-density graphite material. The secondary battery can fully leverage a good cycle performance of the high-tap-density graphite material while reducing the likelihood of severe black spots formed on the negative electrode after full charging of the battery, thereby reducing the likelihood of sudden performance degradation after long-term cycling or high-temperature storage of the battery, and improving the cycle stability and high-temperature storage stability of the battery.

In some embodiments, the compaction density of the negative electrode film layer is less than or equal to 1.55 g/cm³ and is greater than or equal to 1.40 g/cm³.

In some embodiments, the compaction density of the negative electrode film layer is 1.40 g/cm³, 1.43 g/cm³, 1.46 g/cm³, 1.49 g/cm³, 1.52 g/cm³, 1.55 g/cm³, or any value in between.

The compaction density of the electrode plate film layer within an appropriate range can not only reduce the likelihood of severe black spots formed on the surface of the negative electrode plate after full charging of the battery, but also improve the integrity of graphite material particles during cold pressing, thereby maintaining an internal pore structure of the electrode plate and a lower tortuosity of the electrode plate, and balancing long-term cycle stability and high kinetic performance of the secondary battery.

In some embodiments, the graphite material includes primary particles. In some embodiments, a quantity proportion of the primary particles in the graphite material is greater than or equal to 85% based on a total quantity of particles in the graphite material. In some embodiments, the quantity proportion of the primary particles in the graphite material is 85% to 100% based on the total quantity of particles in the graphite material.

In this specification, the term "primary particle" refers to a non-agglomerated particle.

In the present disclosure, the quantity proportion of the primary particles in the graphite material may be tested by using a method known in the art. As an example, any one test sample is selected in the negative electrode film layer. A plurality of test regions are randomly selected from the test sample, and images of the plurality of test regions are captured by using a scanning electron microscope. The percentage of graphite material particles exhibiting primary particle morphology relative to a total number of graphite material particles in each image is counted. An average of a plurality of statistical results is the quantity proportion of the primary particles in the graphite material.

In some embodiments, the quantity proportion of the primary particles in the graphite material is 85%, 86%, 87%, 88%, 89%, 90%, 91%, 92%, 93%, 94%, 95%, 96%, 97%, 98%, 99%, 100%, or any value in between based on the total quantity of particles in the graphite material.

Compared to secondary particles, the primary particles may effectively reduce grain boundary content, reduce the likelihood of side reactions between the graphite material and the electrolyte solution, and improve the uniformity of the electrode plate. A high content proportion of primary particles further improves the cycle stability of the secondary battery.

In some embodiments, Dv1 of the graphite material is 1.5 µm to 3.0 µm. In some embodiments, the Dv1 of the graphite material is 1.6 µm to 2.8 µm.

In this specification, the terms "Dv1", "Dv50", "Dv90", and "Dv10" refer to particle sizes at which the cumulative volume distribution of the material reaches 1%, 50%, 90%, and 10% in the particle size distribution curve respectively.

In the present disclosure, the volume distribution particle sizes Dv1, Dv50, Dv90, and Dv10 of the graphite material may be tested by using a method known in the art. As an example, with reference to GB/T 19077-2016, the laser particle size analyzer may be used for testing. The test instrument can be Model Mastersizer 3000 laser particle size analyzer of Malvern Instruments Inc., UK.

In some embodiments, the Dv1 of the graphite material is 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, 3.0 µm, or any value in between.

The applicants have found that the particle size Dv1 of the graphite material significantly affects an electrochemical performance of the secondary battery. The Dv1 of the graphite material within an appropriate range ensures a particular proportion of fine powder, namely a small-particle-size graphite material, in the negative electrode film layer, which enhances electrical contact of the negative electrode film layer and improves kinetic performance, thereby prompting earlier termination of gas generation during formation at a state of charge (SOC), and reducing the likelihood of severe black spots formed during battery production and the likelihood of sudden degradation in electrochemical performance during cycling of the battery. In addition, the likelihood of a small-particle-size graphite material clogging the pores of the negative electrode film layer can be reduced, maintaining normal electrode plate pores facilitates high wettability of the electrolyte solution, the risk of lithium plating on the negative electrode is reduced, and the cycle stability of the battery is further improved.

In some embodiments, Dv50 of the graphite material is 12 µm to 16 µm. In some embodiments, the Dv50 of the graphite material is 13 µm to 15 µm.

In some embodiments, the Dv50 of the graphite material is 12 µm, 13 µm, 14 µm, 15 m, 16 m, or any value in between.

The graphite material has a large volume distribution particle size Dv50, which facilitates the formation of appropriate pore channel structures between particles in the negative electrode film layer, promotes thorough infiltration of the electrolyte solution into the negative electrode plate, reduces the likelihood of local polarization, and mitigates the impact of black spots on the cycle life and storage stability of the battery.

In some embodiments, a particle size distribution (Dv90-Dv10)/Dv50 of the graphite material is 1.2 to 1.7. In some embodiments, the particle size distribution (Dv90-Dv10)/Dv50 of the graphite material is 1.35 to 1.60.

In some embodiments, the particle size distribution (Dv90-Dv10)/Dv50 of the graphite material is 1.2, 1.25, 1.3, 1.35, 1.4, 1.45, 1.5, 1.55, 1.6, 1.65, 1.7, or any value in between.

The graphite material with a particle size distribution within the foregoing range can reduce the uneven distribution of active ions caused by a large difference in particle size in the graphite material, reduce side reactions between the small-particle-size graphite material and the electrolyte solution, and improve the cycle performance and storage stability of the secondary battery.

In some embodiments, a specific surface area of the graphite material is 0.6 m²/g to 1.5 m²/g. In some embodiments, the specific surface area of the graphite material is 0.9 m²/g to 1.4 m²/g.

In the present disclosure, the specific surface area of the graphite material may be tested by using a method known in the art. As an example, with reference to GB/T 19587-2017, a nitrogen adsorption specific surface area analysis test method may be used for testing, and a Brunauer Emmett Teller (BET) method is used for calculation. The test instrument may be a Tri-Star 3020 type specific surface area and pore size analysis tester available from Micromeritics company, the United States.

In some embodiments, the specific surface area of the graphite material is 0.6 m²/g, 0.7 m²/g, 0.8 m²/g, 0.9 m²/g, 1 m²/g, 1.1 m²/g, 1.2 m²/g, 1.3 m²/g, 1.4 m²/g, 1.5 m²/g, or any value in between.

The graphite material with a small specific surface area can reduce the likelihood of side reactions between the graphite material and the electrolyte solution, and enhance the cycle performance and storage stability of the battery.

In some embodiments, an oil absorption of the graphite material is less than or equal to 45 ml/100 g. In some embodiments, the oil absorption of the graphite material is 30 ml/100 g to 45 ml/100 g.

In this specification, the term "oil absorption" refers to the volume of linseed oil that can be absorbed by 100 g of graphite material. For example, that the oil absorption of the graphite material is 40 ml/100 g indicates that 100 g of graphite material can absorb 40 ml of linseed oil.

The oil absorption of the graphite material may be tested by using a method and device known in the art. For example, test oil and a graphite material sample are obtained respectively, and a torque threshold of an oil absorption tester is set. The oil is added at a constant rate to a sample in a mixing chamber of the oil absorption tester. As the absorption amount of the oil to the sample increases, the viscosity of a mixture of the sample and the oil gradually increases. When the viscosity reaches the preset torque threshold of the oil absorption tester, the operation is stopped. The volume of oil absorbed per unit mass of the sample is calculated, which represents the oil absorption QI of the sample. The test oil is linseed oil (DBP), and the torque threshold is 1 N.

In some embodiments, the oil absorption of the graphite material is 30 ml/100 g, 31 ml/100 g, 32 ml/100 g, 33 ml/100 g, 34 ml/100 g, 35 ml/100 g, 36 ml/100 g, 37 ml/100 g, 38 ml/100 g, 39 ml/100 g, 40 ml/100 g, 41 ml/100 g, 42 ml/100 g, 43 ml/100 g, 44 ml/100 g, 45 ml/100 g, or any value in between.

The oil absorption of the graphite material can, to some extent, reflect the dispersibility of the graphite material in a negative electrode slurry. A high oil absorption of the graphite material means that the graphite material requires more dispersant (e.g., sodium carboxymethyl cellulose) for wetting during dispersion, and slurry sedimentation is more likely to be caused, resulting in unstable quality during the coating of the electrode plate and uneven thickness of the cold-pressed electrode plate. The graphite material with the oil absorption within the foregoing range not only exhibits good wettability to the electrolyte solution, contributing to good kinetic performance and cycle stability of the secondary battery, but also maintains excellent particle dispersion during stirring, reducing the likelihood of slurry sedimentation caused by excessive adsorption of the dispersant by the graphite material, thereby enabling a wider processing window for coating of the electrode plate and improved uniformity of the electrode plate.

In some embodiments, a graphitization degree of the graphite material is 88% to 93%. In some embodiments, the graphitization degree of the graphite material is 89% to 92%.

In this specification, the term "graphitization degree" refers to an indicator measuring the extent to which carbon atoms form a closely packed hexagonal graphite crystal structure.

In the present disclosure, the graphitization degree of the graphite material may be tested by using a method known in the art. As an example, the test is conducted by using an X-ray diffractometer (e.g., BrukerD8Discover). With reference to JISK0131-1996 and JB/T4220-2011, an average interlayer spacing d₀₀₂ of a (002) crystal plane in a graphite material crystal structure is obtained, and the graphitization degree is calculated according to the formula: g=(0.344-d₀₀₂)/(0.344-0.3354)×100%. In the foregoing formula, d₀₀₂ represents the average interlayer spacing (in nm) of the (002) crystal plane in the graphite material crystal structure.

In some embodiments, the graphitization degree of the graphite material is 88%, 89%, 90%, 91%, 92%, 93%, or any value in between.

Controlling the graphitization degree within the foregoing range allows for a balance between achieving high capacity of the graphite material and minimizing volume change of a graphite active material during charging, thereby contributing to further improvement of the cycle stability.

In some embodiments, the areal density of the negative electrode film layer is 7 mg/cm² to 14 mg/cm². In some embodiments, the areal density of the negative electrode film layer is 9 mg/cm² to 12 mg/cm².

In the present disclosure, the areal density of the negative electrode film layer may be tested by using a method known in the art. As an example, a cold-pressed negative electrode plate is taken and punched into a small disc with an area of S1, and a weight is measured and recorded as M1. A negative electrode film layer of the weighed negative electrode plate is then wiped off. The weight of a negative electrode current collector is measured and recorded as M0. The areal density of the negative electrode film layer is calculated as follows: Areal Density = (Weight of Negative Electrode Plate M1 - Weight of Negative Electrode Current Collector M0) / S1.

In some embodiments, the areal density of the negative electrode film layer is 7 mg/cm², 8 mg/cm², 9 mg/cm², 10 mg/cm², 11 mg/cm², 12 mg/cm², 13 mg/cm², 14 mg/cm², or any value in between.

In some embodiments, the graphite material includes artificial graphite.

In some embodiments, a method for preparing the graphite material includes the following steps: providing a raw material, where the raw material includes at least one of petroleum coke, needle coke, and pitch coke, and based on a total structural volume of the raw material, a combined volume proportion of a mosaic-type structure and a domain-type structure in the raw material is greater than or equal to 60%; processing the raw material to obtain an intermediate product; and graphitizing the intermediate product to obtain a graphite material.

In this specification, the term "petroleum coke" refers to coke formed by high-temperature carbonization of petroleum residue or petroleum asphalt, which is referred to as the petroleum coke.

In this specification, the term "needle coke" refers to coke with a needle-like texture, produced from coal tar pitch or petroleum asphalt through liquid-phase carbonization that forms an anisotropic mesophase, followed by high-temperature carbonization.

In this specification, the term "pitch coke" refers to a solid material produced from high-temperature carbonization of coal tar pitch.

In some embodiments, the raw material includes petroleum coke.

The petroleum coke exhibits excellent anisotropy, which facilitates the preparation of a graphite material with low graphitization degree and low expansion, thereby contributing to the long cycle life of the battery. Additionally, the petroleum coke has high compaction density and high gram capacity, which are beneficial for enhancing the energy density of the battery. Furthermore, a wider source of the petroleum coke facilitates industrialized production.

The raw material generally includes at least one of mosaic-type, domain-type, and fibrous structures. According to morphological features and the size of isochromatic regions of the coke observed under polarized light microscopy, the isochromatic region microstructures less than 30 µm are generally determined as mosaic-type. The isochromatic region microstructures greater than 30 µm are determined as domain-type, and anisotropic stripped isochromatic regions are determined as fibrous structures.

In the present disclosure, the proportions of the mosaic-type structure and the domain-type structure in the raw material may be tested by using a method known in the art. As an example, with reference to GB 1997-89, a raw material is used, crushed to 1mm, and blended, to obtain a sample of 40 g to 50 g through division. Using a square-hole sieve, 4 to 5 g of sample with a size between 0.07 mm and 1.0 mm is sieved for section preparation. With reference to MT 116.1-86, powdered coke and lump coke polished sections are prepared. The diameter of the powdered coke polished section is required to be not less than 22mm, where the volume occupied by cement should be less than 1/3. The sample is placed on a slide with cement, flattened, and located on a microscope stage for focusing. After calibrating the microscope, a polarizer and an analyzer are adjusted to achieve an orthogonal state. A gypsum test plate (1 λ) is inserted to produce a first-order red interference color in the field of view. A moving step size is determined to ensure even distribution of at least 400 effective measurement points. A point spacing of 0.3 mm to 0.5 mm and a line spacing of 0.5 mm to 0.8 mm are generally recommended. Starting from one end of the sample, a microstructure category under a crosshair intersection point is determined. The combined volume proportion of the mosaic-type structure and the domain-type structure in the raw material is calculated by dividing total test points counted by the number of effective points of optical textures of the mosaic-type structure and the domain-type structure.

In some embodiments, the combined volume proportion of the mosaic-type structure and the domain-type structure in the raw material is 60%, 65%, 70%, 75%, 80%, 85%, 90%, 95%, 100%, or any value in between based on the total structural volume of the raw material.

A precursor with a high combined proportion of the mosaic-type structure and the domain-type structure in the raw material has higher isotropy, which is beneficial for preparing a graphite material with a lower graphitization degree, reducing the expansion rate of lattices during the charge and discharge cycles, and improving the cycle stability of the battery.

In some embodiments, a power applied during graphitizing is 70% to 90% of a rated power of a device.

In some embodiments, the power applied during graphitizing is 70%, 75%, 80%, 85%, 90%, or any value in between of the rated power of the device. It may be understood that the graphitizing device refers to any apparatus capable of graphitizing, including but not limited to an Acheson furnace, a chamber furnace, an internal series furnace, a continuous graphitization furnace, an electric calcination furnace, a medium-frequency furnace, and a tube furnace. The rated power of the graphitizing device produced by different manufacturers may vary and may be selected according to actual conditions.

The power applied during graphitizing used in the present disclosure is maintained below the rated power of the graphitizing device to implement evenness of a temperature field during graphitizing. The consistency in the gram capacity of the material is ensured, which is beneficial for improving the cycle life of the battery.

In some embodiments, a maximum power applied during graphitizing is 23000 W to 25000 W.

In some embodiments, the maximum power applied during graphitizing is 23000W, 23500W, 24000W, 24500W, 25000 W, or any value in between.

Controlling the maximum power applied during graphitizing effectively regulates the graphitization degree of the graphite material during heat treatment, thereby contributing to improved cycle stability of the battery.

In some embodiments, a constant power time at the maximum power applied during graphitizing is 10 h to 50 h.

In some embodiments, the constant power time at the maximum power applied during graphitizing is 10 h, 13 h, 16 h, 19 h, 22 h, 25 h, 30 h, 35 h, 40 h, 45 h, 50 h, or any value in between.

In some embodiments, the graphitizing device is an internal series furnace, and time at the maximum power applied during graphitizing is 10 h to 30 h.

In some embodiments, the graphitizing device is an Acheson furnace, and time at the maximum power applied during graphitizing is 30 h to 50 h.

An appropriate graphitizing time helps prevent excessive rearrangement of a precursor, which leads to an excessively high specific surface area of the graphitized graphite material and degrades the cycle performance. Also, the gram capacity of the graphite material can be effectively improved, thereby improving both the energy density and cycle life of the secondary battery.

In some embodiments, the processing the raw material specifically includes the following steps: crushing, shaping, and classifying the raw material, to obtain a secondary raw material; and removing a particular proportion of fine powder from the secondary raw material, to obtain a precursor, where the mass of the removed fine powder accounts for 15% to 45% of the total mass of the secondary raw material, and Dv50 of the fine powder is 3 µm to 7 µm, and Dv99 is less than or equal to 30 µm.

In some embodiments, when crushing the raw material, the raw material may be crushed by using a crusher, such as a jaw crusher. For example, the raw material may first be crushed to a set particle size before sieving, such as using a 3-20 mesh sieve.

In some embodiments, when shaping the raw material, the crushed raw material may be shaped by using a shaper. The shaping may reduce burrs on the surface of the crushed raw material, to obtain a smooth graphite material.

In some embodiments, when classifying the raw material, the shaped raw material may be classified by using an air classifier. In some embodiments, an air induction frequency may be greater than or equal to 20 Hz, a classification frequency may be greater than or equal to 65 Hz. The classification may reduce the content of large and small particles in the precursor.

In some embodiments, based on the total mass of the secondary raw material, the proportion of the fine powder removed from the secondary raw material is any one of 10%, 15%, 20%, 25%, 30%, and 35%, or within a range formed by any two thereof.

By controlling the proportion of the removed fine powder within an appropriate range, the volume distribution particle size Dv1 of the graphite material may be maintained within an appropriate range, which not only allows the electrode plate to exhibit an excellent liquid absorption rate and ensures that the electrolyte solution fully wets the negative electrode plate, but also facilitates excellent electrical contact between graphite particles, thereby improving the cycle performance of the battery comprehensively.

In some embodiments, a volume distribution particle size Dv50 of the precursor is 12 µm to 18 µm.

In some embodiments, the volume distribution particle size Dv50 of the precursor is 12 µm, 13 µm, 14 µm, 15 µm, 16 µm, 17 µm, 18 µm, or any value in between.

In some embodiments, (Dv90-Dv10)/Dv50 of the precursor is 1.3 to 2.0.

In some embodiments, the (Dv90-Dv10)/Dv50 of the precursor is 1.3, 1.4, 1.5, 1.6, 1.7, 1.8, 1.9, 2.0, or any value in between.

Controlling the volume distribution particle size Dv50 or (Dv90-Dv10)/Dv50 of the precursor within an appropriate range is beneficial for controlling the volume distribution particle size Dv50 or (Dv90-Dv10)/Dv50 of the graphite material within an appropriate range, thereby improving the cycle performance of the battery.

In the present disclosure, the type of the secondary battery is not specifically limited. For example, the secondary battery may be a lithium-ion battery. Generally, the secondary battery includes a positive electrode plate, a negative electrode plate, an electrolyte, and the like. During the charging and discharging of the secondary battery, active ions are reversibly intercalated into and deintercalated from the positive electrode plate and the negative electrode plate, while the electrolyte facilitates the conduction of the active ions between the positive electrode plate and the negative electrode plate. The type of the electrolyte is not specifically limited in the present disclosure and may be selected according to actual requirements. For example, the electrolyte may be at least one of a solid electrolyte or a liquid electrolyte (i.e., electrolytic solution). A secondary battery using an electrolytic solution, as well as some secondary batteries using solid electrolytes, may further include a separator. The separator is disposed between the positive electrode plate and the negative electrode plate to provide isolation.

### [Negative Electrode Plate]

In some embodiments, the negative electrode plate includes a negative electrode current collector and a negative electrode film layer arranged on at least one surface of the negative electrode current collector. For example, the negative electrode current collector has two opposite surfaces in a thickness direction thereof. The negative electrode film layer is provided on either or both of the two opposite surfaces of the negative electrode current collector.

In some embodiments, the negative electrode film layer includes a graphite material according to the first aspect of the embodiment of the present disclosure or a graphite material prepared by a method according to the second aspect of the embodiment of the present disclosure. Therefore, the secondary battery can achieve high initial coulomb efficiency, high energy density, and good cycle performance and storage stability.

In some embodiments, the negative electrode film layer may further include another negative electrode active material other than the foregoing graphite material. In some embodiments, the another negative electrode active material may include, but is not limited to, at least one of conventional natural graphite, artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and a tin alloy material.

In some embodiments, the negative electrode film layer further includes a negative electrode conductive agent. A type of the negative electrode conductive agent is not particularly limited in this application. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer further includes a negative electrode binder. A type of the negative electrode binder is not particularly limited in this application. As an example, the negative electrode binder may include one or more of styrene-butadiene rubber (SBR), water-soluble unsaturated resin SR-1B, waterborne acrylic resin (e.g., polyacrylic acid PAA, poly (methyl methacrylate) PMMA, and sodium polyacrylate PAAS), polyacrylamide (PAM), polyvinyl alcohol (PVA), sodium alginate (SA), and carboxymethyl chitosan (CMCS).

In some embodiments, the negative electrode film layer further includes other additives. As an example, the other additives may include a thickener, for example, sodium carboxymethyl cellulose (CMC) or a PTC thermistor material.

In some embodiments, the negative electrode current collector may be a metal foil or a composite current collector. Examples of the metal foil may include a copper foil. The composite current collector may include a high molecular material base layer and a layer of a metal material formed on at least one surface of the high molecular material base layer. As an example, the metal material may include one or more of copper, copper alloy, nickel, nickel alloy, titanium, titanium alloy, silver, and silver alloy. As an example, the high molecular material base layer may include one or more of polypropylene (PP), polyethylene terephthalate (PET), polybutylene terephthalate (PBT), polystyrene (PS), and polyethylene (PE).

The negative electrode film layer is usually formed by applying a negative electrode slurry on the negative electrode current collector, and drying and cold pressing the negative electrode slurry. The negative electrode slurry is usually formed by dispersing the negative electrode active material, a conductive agent, a binder, and other additives in a solvent and performing stirring uniformly. The solvent may be, but is not limited to, N-methylpyrrolidone (NMP) or deionized water.

In the negative electrode plate, other additional functional layers other than the negative electrode film layer are not excluded. For example, in some embodiments, the negative electrode plate according to the present disclosure further includes a conductive primer layer (which is, for example, formed by a conductive agent and a binder) sandwiched between the negative electrode current collector and the negative electrode film layer and disposed on the surface of the negative electrode current collector. In some embodiments, the negative electrode plate according to the present disclosure further includes a protective layer covering the surface of the negative electrode film layer.

### [Positive Electrode Plate]

In some embodiments, the positive electrode plate includes a positive electrode current collector and a positive electrode film layer arranged on at least one surface of the positive electrode current collector. For example, the positive electrode current collector has two opposite surfaces in a thickness direction thereof. The positive electrode film layer is provided on either or both of the two opposite surfaces of the positive electrode current collector.

The positive electrode current collector may be a metal foil or a composite current collector. Examples of the metal foil may include an aluminum foil. The composite current collector may include a high molecular material base layer and a layer of a metal material formed on at least one surface of the high molecular material base layer. As an example, the metal material may include one or more of aluminum, aluminum alloy, nickel, nickel alloy, titanium, titanium alloy, silver, and silver alloy. As an example, the high molecular material base layer may include one or more of polypropylene (PP), polyethylene terephthalate (PET), polybutylene terephthalate (PBT), polystyrene (PS), and polyethylene (PE).

The positive electrode film layer generally includes a positive electrode active material, a binder, and a conductive agent. The positive electrode film layer is usually formed by applying a positive electrode slurry on the positive electrode current collector, and drying and cold pressing the positive electrode slurry. The positive electrode slurry is usually formed by dispersing the positive electrode active material, a conductive agent, a binder, and any other components in a solvent and performing stirring uniformly. The solvent may be, but is not limited to, N-methyl pyrrolidone (NMP). As an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. As an example, the conductive agent for the positive electrode film layer may include one or more of superconducting carbon, conductive graphite, acetylene black, carbon black, Ketjen black, carbon dots, carbon nanotubes, graphene, and carbon nanofibers.

The positive electrode active material may be a positive electrode active material for a secondary battery well known in the art.

When the secondary battery according to the present disclosure is a lithium-ion battery, the positive electrode active material the positive electrode active material may include, but is not limited to, one or more of lithium transition metal oxide, a lithium-containing phosphate, and respective modified compounds thereof. Examples of the lithium transition metal oxide may be, but are not limited to, one or more selected from the group consisting of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve the energy density of the secondary battery, the positive electrode active material for the lithium-ion battery may be one or more selected from the group consisting of lithium transition metal oxide represented by a general formula LiₐNi_{b}Co_{c}M_{d}OₑA_{f} and modified compounds thereof. 0.8≤a≤1.2, 0.5≤b<1, 0<c<1, 0<d<1, 1≤e≤2, 0≤f≤1, M is one or more selected from the group consisting of Mn, Al, Zr, Zn, Cu, Cr, Mg, Fe, V, Ti, and B, and A is one or more selected from the group consisting of N, F, S and Cl.

In some embodiments, as an example, the positive electrode active material for the lithium-ion battery may include, but is not limited to, one or more of LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄, and LiMnPO₄.

In the present disclosure, the modified compounds of the positive electrode active material may be obtained by performing doping modification and/or surface coating modification on the positive electrode active material.

### [Electrolyte]

In some embodiments, the electrolyte may be an electrolyte solution. The electrolyte solution includes an electrolyte salt and a solvent.

The type of the electrolyte salt is not specifically limited, and may be selected according to actual requirements.

When the secondary battery according to the present disclosure is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The type of the solvent is not specifically limited, and may be selected according to actual requirements. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further includes an additive. For example, the additive may include a negative electrode film-forming additive, a positive electrode film-forming additive, or an additive capable of improving certain performance of the secondary battery, such as an additive capable of improving overcharging performance of the secondary battery, an additive capable of improving high temperature performance of the secondary battery, or an additive capable of improving low temperature power performance of the secondary battery.

### [Separator]

The type of the separator is not particularly limited in the present disclosure, and any well-known separator with a porous structure having good chemical stability and mechanical stability may be selected.

In some embodiments, a material of the separator may be one or more selected from glass fiber, non-woven fabric, polyethylene, polypropylene, and polyvinylidene fluoride. The separator may be a single-layer film, or may be a multilayer composite film. When the separator is a multilayer composite film, materials of the layers are the same or different.

In some embodiments, the positive electrode plate, the separator, and the negative electrode plate may be wound or laminated to form an electrode assembly.

In some embodiments, the secondary battery may include an outer package. The outer package may be used to encapsulate the foregoing electrode assembly and electrolyte.

In some embodiments, the outer package may be a hard shell, such as a hard plastic shell, an aluminum shell, or a steel shell. The outer package may alternatively be a soft pack, for example, a pouch type soft pack. The material of the soft pack may be plastic, for example, one or more of polypropylene (PP), polybutylene terephthalate (PBT), and polybutylene succinate (PBS).

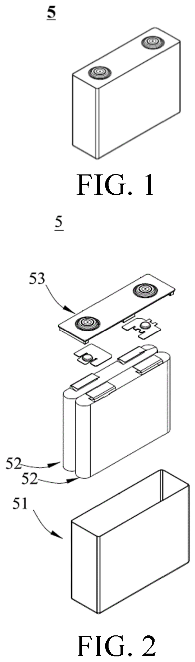

A shape of the secondary battery is not particularly limited in the present disclosure. The secondary battery may be cylindrical, square, or of any other shape. For example, FIG. 1 shows a secondary battery 5 having a rectangle structure as an example.

In some embodiments, as shown in FIG. 2, the outer package may include a case 51 and a cover plate 53. The case 51 may include a bottom plate and a side plate connected to the bottom plate. The bottom plate and the side plate enclose an accommodating cavity. The case 51 has an opening in communication with the accommodating cavity. The cover plate 53 is configured to cover the opening to close the accommodating cavity. The positive electrode plate, the negative electrode plate, and the separator may be wound or laminated to form an electrode assembly 52. The electrode assembly 52 is encapsulated in the accommodating cavity. The electrolyte solution infiltrates into the electrode assembly 52. One or more electrode assemblies 52 may be included in the secondary battery 5, and the quantity may be adjusted according to requirements.

A method for preparing the secondary battery according to the present disclosure is well-known. In some embodiments, the positive electrode plate, the separator, the negative electrode plate, and the electrolyte solution may be assembled into a secondary battery. As an example, the positive electrode plate, the separator, and the negative electrode plate may be wound or laminated to form an electrode assembly. The electrode assembly is placed in an outer package and dried, followed by the injection of the electrolyte solution and processes such as vacuum encapsulation, standing, formation, aging, and the like, to obtain a secondary battery.

In some embodiments of the present disclosure, the secondary battery according to the present disclosure may be assembled into a battery module, a plurality of secondary batteries may be included in the battery module, and a specific quantity may be adjusted based on application and a capacity of the battery module.

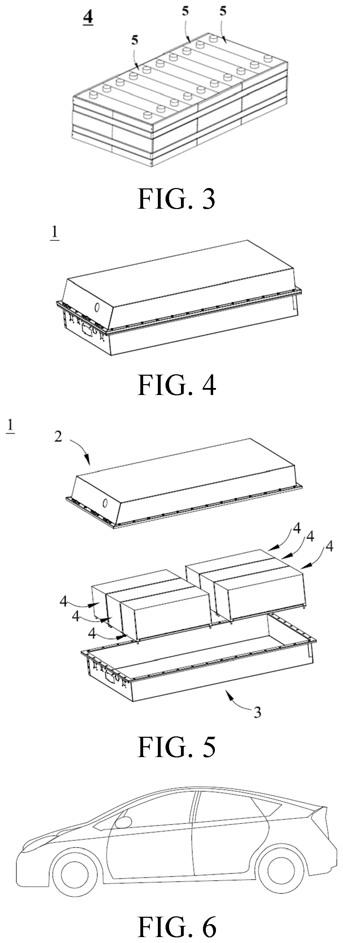

FIG. 3 is a schematic diagram of a battery module 4 as an example. Referring to FIG. 3, in the battery module 4, a plurality of secondary batteries 5 may be sequentially arranged in a length direction of the battery module 4. The secondary batteries may alternatively be arranged in any other manner. The plurality of secondary batteries 5 may further be fixed through a fastener.

In some embodiments, the battery module 4 may further include a shell with an accommodating space. The plurality of secondary batteries 5 are accommodated in the accommodating space.

In some embodiments, the battery modules may further form a battery pack. The quantity of battery modules included in the battery pack may be adjusted based on application and the capacity of the battery pack.

FIG. 4 and FIG. 5 are schematic diagrams of a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 is configured to cover the lower box 3 to form a closed space for accommodating the battery modules 4. The plurality of battery modules 4 may be arranged in the battery box in any way.

### Power Consuming Apparatus

The present disclosure further provides a power consuming apparatus. The power consuming apparatus includes at least one of the secondary battery, the battery module, or the battery pack according to the present disclosure. The secondary battery, the battery module, or the battery pack may be used as a power supply of the power consuming apparatus, and may alternatively be used as an energy storage unit of the power consuming apparatus. The power consuming apparatus may be, but is not limited to, a mobile device (e.g., a mobile phone, a tablet, or a laptop), an electric vehicle (e.g., a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

The power consuming apparatus may select a secondary battery, a battery module, or a battery pack based on a use requirement of the power consuming apparatus.

FIG. 6 is a schematic diagram of a power consuming apparatus as an example. The power consuming apparatus is an all-electric vehicle, a hybrid electric vehicle, a plug-in hybrid electric vehicle, or the like. To meet requirements of the power consuming apparatus for high power and high energy density, a battery pack or a battery module may be used.

For another example, the power consuming apparatus may be a mobile phone, a tablet, a laptop, or the like. The power consuming apparatus is generally required to be light and thin, and may use a secondary battery as a power supply.

### Embodiments

The following embodiments provide a more specific description of the content disclosed in the present disclosure. These embodiments are only used for descriptive purposes, as various modifications and changes within the scope of the content disclosed in the present disclosure are obvious to a person skilled in the art. Unless otherwise stated, all parts, percentages, and ratios described in the following embodiments are based on weight, all reagents used in the embodiments are commercially available or synthesized by conventional methods and may be used directly without further treatment, and all instruments used in the embodiments are commercially available.

### Material 1

Petroleum coke including 63.1% of a mosaic-type structure and a domain-type structure was coarsely crushed. Then the coarsely crushed material was crushed and sieved. The sieved material was then shaped and classified. A particular amount of fine powder was removed during the classification, to obtain a precursor. The removed fine powder accounted for 17% of the total mass of raw materials of the petroleum coke. The obtained precursor had a Dv50 particle size of 15.5 µm and a particle size distribution (Dv90-Dv10)/Dv50 of 1.92. The fine powder was a component having a Dv50 of 3 µm to 7 µm and a Dv99 less than or equal to 30 µm.

The precursor was graphitized in an Acheson furnace at a temperature of 2800°C, with a maximum power of 24000W. After processing at the maximum power for 40 h, a surface temperature of a crucible of the Acheson furnace was lowered to 400°C, and the graphite crucible was removed. After sieving and demagnetizing, a graphite material was obtained.

The graphite material had a tap density of 1.21 g/cm³, Dv1 of 1.8 µm, Dv50 of 14.6 µm, a particle size distribution (Dv90-Dv10)/Dv50 of 1.42, a specific surface area of 1.14m²/g, and a graphitization degree of 91.1%.

### Materials 2 to 5

The preparation method of materials 2-5 is similar to that of material 1, except that the proportion of the removed fine powder and the particle size distribution of the precursor are adjusted.

The adjusted parameters for the materials and specific material properties are shown in Table 1.

**Table 1**

| No. | Mass ratio of removed fine powder | Particle size distribution of precursor | Tap density of graphite material g/cm³ | DV1 of graphite material µm |
|---|---|---|---|---|
| Material 1 | 17% | 1.92 | 1.21 | 1.82 |
| Material 2 | 26% | 1.83 | 1.25 | 2.29 |
| Material 3 | 29% | 1.71 | 1.30 | 2.65 |

| | | | | |
|---|---|---|---|---|
| Material 4 | 39% | 1.55 | 1.40 | 4.39 |
| Material 5 | 12% | 2.02 | 1.17 | 1.54 |

### Embodiment 1

The prepared material 1, carbon black (Super P) as a conductive agent, styrene-butadiene rubber as a binder, and sodium carboxymethyl cellulose as a thickener were fully stirred and mixed at a weight ratio of 95.4:1.8:1.0:1.8 in an appropriate amount of solvent, namely, deionized water, to obtain a negative electrode slurry. The negative electrode slurry was coated on two surfaces of a negative electrode current collector which was a copper foil, followed by drying and cold pressing, to obtain a negative electrode plate. The negative electrode film layer had a compaction density of 1.50 g/cm³ and an areal density of 9.4 mg/cm².

Lithium iron phosphate (LFP) as a positive electrode active material, Super P as a conductive agent, and PVDF as a binder were mixed at a mass ratio of 97:1:2, and a solvent, namely, N-methylpyrrolidone (NMP), was added and stirred uniformly under the action of a vacuum stirrer, to obtain a positive electrode slurry. The positive electrode slurry was evenly coated on an aluminum foil, which acted as a positive electrode current collector, followed by drying, cold pressing, and slitting to obtain a positive electrode plate. The positive electrode film layer had a compaction density of 2.50 g/cm³ and an areal density of 20 mg/cm².

In an argon atmosphere glove box with a water content less than 10 ppm, ethylene carbonate (DEC), ethyl methyl carbonate (EMC), and diethyl carbonate (EC) were mixed at a weight ratio of 1:1:1 to obtain an organic solvent. Then, LiPF6 was dissolved in the organic solvent to prepare an electrolyte solution with a concentration of 1.0 mol/L. Then, vinylene carbonate (VC) was added at a content of 2% by total mass of the electrolyte solution.

A polypropylene film was used as a separator.

The positive electrode plate, the separator, and the negative electrode plate were laminated in sequence, to cause the separator to isolate the positive electrode plate and the negative electrode plate from each other. Then, the positive electrode plate, the separator, and the negative electrode plate were wound to obtain an electrode assembly. The electrode assembly was placed in an outer package, and an electrolytic solution was injected after drying, followed by procedures such as vacuum packing, standing, formation, and shaping, to obtain a lithium-ion battery.

### Embodiments 2 to 6 and Comparative Examples 1 and 2

The preparation method of the secondary battery is similar to that of Embodiment 1, except that different graphite materials are used or the compaction density of the electrode plate film layer is adjusted, as detailed in Table 2.

### Performance Test

### (1) Formation Cut-off State of charge (SOC) Test

At 25°C, the battery prepared from the embodiments and comparative examples after injection was charged at 0.33 C, and gas generated during the formation was collected. The corresponding SOC was recorded when the total amount of gas was not increased.

### (2) Black Spot Condition Test

At 25°C, the battery prepared from the embodiments and comparative examples was charged at a constant current of 0.33 C until the voltage reached 3.65 V, and then disassembled in a drying chamber to observe whether there were black spots on the surface of the negative electrode plate. If a ratio of the total area of the black spots to the total area of the negative electrode plate was less than or equal to 1% and a ratio of the area of black spots in a single electrode plate to the area of this electrode plate was less than or equal to 8%, the black spots were defined as Level 1 black spots. If a ratio of the total area of the black spots to the total area of the negative electrode plate was greater than 1% and less than or equal to 3% or a ratio of the area of black spots in a single electrode plate to the area of this electrode plate was greater than 8% and less than or equal to 15%, the black spots were defined as Level 2 black spots. If a ratio of the total area of the black spots to the total area of the negative electrode plate was greater than 3% or a ratio of the area of black spots in a single electrode plate to the area of this electrode plate was greater than 15%, the black spots were defined as Level 3 black spots.

### (3) Cycle Performance Test for Secondary Battery

At 60°C, the batteries from each of the aforementioned embodiments and comparative examples were charged at a constant current of 1 C until the voltage reached 3.65 V, followed by constant voltage charging at 3.65 V until the current was 0.05 C. The batteries were then discharged at a constant current of 1 C until the voltage reached 2.5V. This was one charge-discharge process. A discharge capacity of the first cycle was recorded as C1. The charge and discharge cycles were repeated until the battery capacity faded to 80% of the initial capacity C1, at which point the number of cycles was recorded.

### (4) 120-Day Storage Stability Test for Secondary Battery

In a 25°C environment, a charge and discharge test was performed, the secondary battery was charged at a constant current of 0.5 C to 3.65 V, then charged at a constant voltage until the current dropped to 0.05 C. After standing for 5 min, the secondary battery was discharged at a constant current of 0.5 C to 2.5 V, and a discharge capacity at this point was recorded as an initial discharge capacity. Then, a fully charged cell was placed in a 60°C environment for different durations. Every 30 days, the cell was taken out and the remaining capacity was tested at 25°C. This was one storage cycle, and the discharge capacity during this test was the discharge capacity after the first storage. Subsequently, the process of the first storage test was repeated, the discharge capacity values during the storage were recorded, and a ratio of the discharge capacity after 120 days to the initial discharge capacity was used as a 120-day storage capacity retention rate.

### Test Results

In accordance with the foregoing methods, the batteries of the embodiments and comparative examples were prepared, and tested for various performance parameters. The results are shown in a table below.

**Table 2**

| No. | Adopted graphite material | Tap density of graphite material (g/cm3) | Compaction density (g/cm3) | Compaction density - tap density (g/cm3) | Formation cut-off SOC | Black spots after full charging | Quantity of cycles/circle | Storage capacity retention rate |
|---|---|---|---|---|---|---|---|---|
| Embodiment 1 | Material 1 | 1.21 | 1.50 | 0.29 | 17.30% | No | 2116 | 91.50% |
| Embodiment 2 | Material 2 | 1.25 | 1.50 | 0.25 | 23.10% | No | 2173 | 91.90% |
| Embodiment 3 | Material 3 | 1.30 | 1.50 | 0.20 | 35.10% | No | 2219 | 92.10% |
| Embodiment 4 | Material 4 | 1.40 | 1.55 | 0.15 | 53.30% | Level 1 | 2011 | 91.20% |
| Embodiment 5 | Material 2 | 1.25 | 1.45 | 0.20 | 30.10% | No | 2189 | 92.30% |
| Embodiment 6 | Material 2 | 1.25 | 1.40 | 0.15 | 51.70% | Level 1 | 2132 | 92.70% |
| Comparative Example 1 | Material 2 | 1.25 | 1.35 | 0.10 | 75.30% | Level 3 | 1932 | 91.10% |
| Comparative Example 2 | Material 5 | 1.17 | 1.50 | 0.33 | 18.60% | No | 1854 | 90.20% |

From the comparison of the embodiments and the comparative examples, it can be seen that in the secondary battery, the negative electrode film layer includes a graphite material, and the graphite material has a tap density of 1.2 g/cm³ to 1.4 g/cm³. In addition, the difference between the compaction density of the negative electrode film layer and the tap density of the graphite material is greater than or equal to 0.15 g/cm³. This configuration can fully utilize the advantages of a high-tap-density negative electrode material, improving the cycle stability of the battery while reducing the severity of negative electrode black spots, thereby improving the cycle stability and storage stability of the battery.

From Embodiments 1 to 4, it can be seen that when the Dv1 of the graphite material is 1.5 µm to 3.0 µm, the formation cutoff SOC of the battery is further reduced, and the cycle stability is further improved. Formation is the process of the first charge of the battery and activation of the internal electrochemical reactions of the battery. As the formation charge proceeds, lithium ions are deintercalated from the positive electrode material, transported through the electrolyte solution across the separator to the negative electrode, and intercalated into the negative electrode material, thereby creating a potential difference between the positive electrode and the negative electrode, and converting electrical energy into chemical energy of the battery. When the formation voltage reaches a particular level, a redox reaction occurs at a solid-liquid interface between the negative electrode and the electrolyte solution, to generate a solid electrolyte interfacial film (SEI film). A higher formation cutoff SOC indicates more charge during the formation, more lithium ions consumed for forming the SEI film, a higher severity of the black spots generated on the negative electrode of the battery, and a lower initial efficiency of the battery. Reducing the formation cutoff SOC of the battery is beneficial for lowering the severity of the black spots on the negative electrode and improving the cycle stability and high-temperature storage stability of the battery.

It should be noted that the present disclosure is not limited to the foregoing embodiments. The foregoing embodiments are only illustrative, and the embodiments within the scope of the technical solution of the present disclosure that have substantively the same composition and the same role and effect as the technical idea are all included within the technical scope of the present disclosure. In addition, within the scope of not departing from the gist of the present disclosure, various variations made to the embodiments that are conceivable to those skilled in the art and other modes constructed by combining some constituent elements of the embodiments are also included within the scope of the present disclosure.

## Claims

1. A secondary battery, comprising a negative electrode plate, wherein the negative electrode plate comprises a negative electrode current collector and a negative electrode film layer formed on at least one surface of the negative electrode current collector, the negative electrode film layer comprises a graphite material, and the graphite material has a tap density of 1.2 g/cm³ to 1.4 g/cm³; and a difference between a compaction density of the negative electrode film layer and the tap density of the graphite material is greater than or equal to 0.15 g/cm³.

2. The secondary battery according to claim 1, wherein a compaction density of the negative electrode film layer is less than or equal to 1.55 g/cm³ and is greater than or equal to 1.40 g/cm³.

3. The secondary battery according to claim 1 or 2, wherein the graphite material comprises primary particles; and optionally, a quantity proportion of the primary particles in the graphite material is greater than or equal to 85%, optionally 85% to 100%, based on a total quantity of particles in the graphite material.

4. The secondary battery according to any one of claims 1 to 3, wherein Dv1 of the graphite material is 1.5 µm to 3.0 µm, optionally 1.6 µm to 2.8 µm.

5. The secondary battery according to any one of claims 1 to 4, wherein Dv50 of the graphite material is 12 µm to 16 µm, optionally 13 µm to 15 µm.

6. The secondary battery according to any one of claims 1 to 5, wherein a particle size distribution (Dv90-Dv10)/Dv50 of the graphite material is 1.2 to 1.70, optionally 1.35 to 1.60.

7. The secondary battery according to any one of claims 1 to 6, wherein a specific surface area of the graphite material is 0.6 m²/g to 1.5 m²/g, optionally 0.9 m²/g to 1.4 m²/g.

8. The secondary battery according to any one of claims 1 to 7, wherein an oil absorption of the graphite material is less than or equal to 45 ml/100g, optionally 30 ml/100 g to 45 ml/100 g.

9. The secondary battery according to any one of claims 1 to 8, wherein a graphitization degree of the graphite material is 88% to 93%, optionally 89% to 92%.

10. The secondary battery according to any one of claims 1 to 9, wherein an areal density of the negative electrode film layer is 7 mg/cm² to 14 mg/cm², optionally 9 mg/cm² to 12 mg/cm².

11. The secondary battery according to any one of claims 1 to 10, wherein the graphite material comprises artificial graphite.

12. A power consuming apparatus, comprising a secondary battery according to any one of claims 1 to 11.
